(19) Europäisches Patentamt
European Patent Office
Office européen des brevets

(11) EP 3 450 482 B1

(12) **EUROPEAN PATENT SPECIFICATION**

(45) Date of publication and mention of the grant of the patent:
**03.03.2021 Bulletin 2021/09**

(21) Application number: **17789815.2**

(22) Date of filing: **12.04.2017**

(51) Int Cl.:
***C09D 179/08*** *(2006.01)*

(86) International application number:
**PCT/KR2017/003944**

(87) International publication number:
**WO 2017/188630 (02.11.2017 Gazette 2017/44)**

(54) **HIGH-STRENGTH TRANSPARENT POLYAMIDE-IMIDE AND METHOD FOR MANUFACTURING SAME**

HOCHFESTES TRANSPARENTES POLYAMIDIMID UND VERFAHREN ZUR HERSTELLUNG DAVON

POLYAMIDE-IMIDE TRANSPARENT DE HAUTE RÉSISTANCE ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.04.2016 KR 20160050695**

(43) Date of publication of application:
**06.03.2019 Bulletin 2019/10**

(73) Proprietor: **LG Chem, Ltd.**
**Seoul 07336 (KR)**

(72) Inventors:
- **YUN, Cheolmin**
**Daejeon 34122, (KR)**
- **SUH, Jun Sik**
**Daejeon 34122, (KR)**
- **KIM, Kyungjun**
**Daejeon 34122, (KR)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**EP-A1- 3 045 490**
**EP-A1- 3 315 534**
**WO-A1-2013/048126**
**WO-A1-2013/100557**
**WO-A1-2015/099461**
**KR-A- 20130 029 129**
**KR-A- 20130 071 650**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

[Technical Field]

The present invention relates to a colorless and transparent polyamide-imide having a mechanical property of high strength, and a method for manufacturing thereof.

[Background Art]

Polyimide (PI) is a polymer having relatively low crystallinity or substantially amorphous structure, and it has advantages such as easy manufacturing process, easy process to make a thin film and no crosslinkable moieties necessary for curing, as well as polymeric properties such as high transparency, excellent thermal and chemical resistance, excellent mechanical and electrical properties, and dimensional stability due to its rigid chain structure. The polyimide is now widely used as an electrical and electronical material for the field of car and aerospace, a flexible circuit board, a liquid crystal alignment film for LCD, an adhesive as well as a coating agent.

However, even though the polyimide is a high performance polymer with excellent thermal stability, mechanical properties, chemical resistance and electrical properties, it does not satisfy the basic requirements for the display area such as colorless transparency, and the thermal expansion coefficient should be further lowered. For example, KAPTON sold by Dupont has a low thermal coefficient of about 30 ppm/°C, but it also does not meet the requirement for the plastic substrate. Therefore, now studies for minimizing change in thermal history and optical properties while maintaining the basic properties of the polyimide are underway.

In general, aromatic polyimide has unique color of dark brown. The reason for this is that electrons can be excited due to σ electrons, π electrons, nonbonding unshared electron pairs within the imide structure, and it can be explained by the theory of charge transfer complex (hereinafter, called CT-complex) induced by π electrons of benzene within a main chain of the polyimide.

In general, the polyimide absorbs light of the wavelength below 400 nm to 500 nm of visible light region, and therefore it shows complementary color of yellow to red. In order to lower the CT-complex that is an disadvantage of the polyimide, a method of introducing an electron-withdrawing functional group having relatively strong electronegativity such as trifluoromethyl ($-CF_3$), sulfone ($-SO_2$) and ether (-O-) to the main chain of the polyimide is used to lower resonance effect by limiting the movement of π electrons. Also introducing a cyclo-olefin structure instead of benzene to the main chain of the polyimide can reduce π electron density to manufacture a colorless transparent polyimide film.

Meanwhile, polyamide-imide has been widely used as an industrial material in the electrical, mechanical, electronic and aerospace fields due to its excellent properties such as thermal resistance, mechanical strength and electrical property. Also, in general, structure of the polyamide-imide is different from that of the polyimide and is known to be soluble in an organic solvent, allowing for the application for an enamel varnish, a coating agent for electrical insulation and paint, which need solution casting.

However, for the application in the display area, it is still necessary to develop a polymer for the flexible display with lower thermal expansion coefficient, high solubility, transparency as well as thermal stability.

[Disclosure]

[Technical Problem]

One object of the present invention is to provide polyamide-imide with enhanced transparency and mechanical strength.

Another object of the present invention is to provide a method for manufacturing the polyamide-imide.

Further object of the present invention is to provide high strength transparent polyamide-imide film manufactured with the polyamide-imide.

[Technical Solution]

In order to accomplish the aforementioned object, the present invention provides polyamide-imide containing a repeating structure of the following Chemical Formula 1a, a repeating structure of the following Chemical Formula 1b and a repeating structure of the following Chemical Formula 1c together, wherein the repeating structure of Chemical Formula 1b is contained in an amount of from 5 mol% to 20 mol%, based on the total amount of the repeating structure of Chemical Formula 1a and the repeating structure of Chemical Formula 1b:

[Chemical Formula 1a]

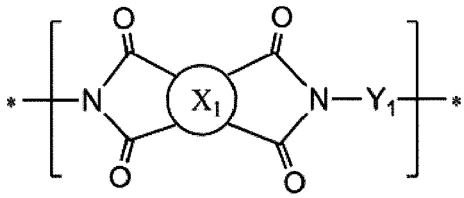

[Chemical Formula 1c]

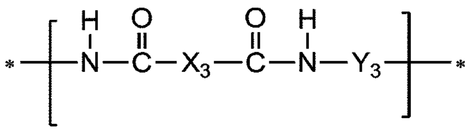

[Chemical Formula 1c]

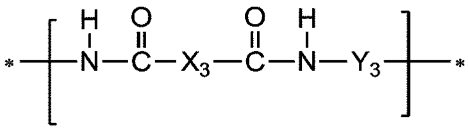

wherein,

$X_1$ is a tetravalent organic group of the following Chemical Formula 2 derived from tetracarboxylic dianhydride:

[Chemical Formula 2]

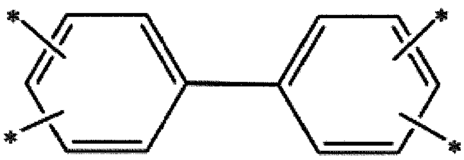

$X_2$ is a tetravalent organic group of the following Chemical Formula 3 derived from tetracarboxylic dianhydride, wherein the tetracarboxylic dianhydride of Chemical Formula 3 is contained in an amount of from 5 mol% to 15 mol%, based on the total amount of the tetracarboxylic dianhydride of Chemical Formula 2 and the tetracarboxylic dianhydride of Chemical Formula 3,

[Chemical Formula 3]

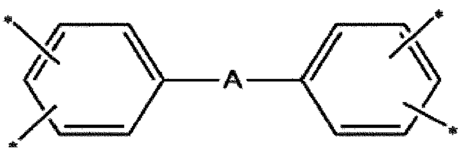

wherein,

A is $-CR_{15}R_{16}-$, wherein $R_{15}$ and $R_{16}$ may be each independently selected from a $C_{1-10}$ fluoroalkyl group,
$X_3$ is a divalent organic group derived from the compound of the following Chemical Formula 4,

[Chemical Formula 4]

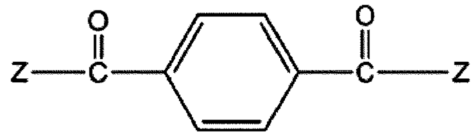

wherein,

Z is each independently one selected from a hydroxyl group (-OH), a halide group selected from -Cl, -Br, -F and -I, and a $C_{1-5}$ alkoxyl group (-OR),
$Y_1$, $Y_2$ and $Y_3$ are each independently a divalent organic group derived from diamine, and at least one thereof contains a divalent organic group of the following Chemical Formula 5:

[Chemical Formula 5]

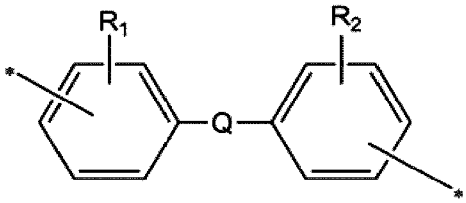

wherein,

$R_1$ and $R_2$ are each independently a substituent selected from a halogen atom selected from the group consisting of -F, -Cl, -Br and -I, a hydroxyl group (-OH), a thiol group (-SH), a nitro group ($-NO_2$), a cyano group, a $C_{1-10}$ alkyl group, a $C_{1-4}$ halogenoalkoxyl group, a $C_{1-10}$ halogenoalkyl group, and a $C_{6-20}$ aryl group,
Q may be selected from the group consisting of a single bond, -O-, - $CR_{18}R_{19}$-, -C(=O)-, -C(=O)O-, -C(=O)NH-, -S-, $-SO_2-$, a phenylene group and a combination thereof, wherein $R_{18}$ and $R_{19}$ may be each independently selected from the group consisting of a hydrogen atom, a $C_{1-10}$ alkyl group and a $C_{1-10}$ fluoroalkyl group.

Further, the present invention provides a method for manufacturing the polyamide-imide.
In order to accomplish the other object, the present invention provides a polyamide-imide film comprising the polyamide-imide.

[Advantageous Effects]

The present invention provides a polyamide-imide film with highly enhanced mechanical properties and heat resistance while maintaining transparency. The polyamide-imide with excellent transparency, heat resistance, mechanical strength and flexibility can be used in various fields such as a substrate for a device, a cover substrate for a display, an optical film, an integrated circuit (IC) package, an adhesive film, a multi-layer flexible printed circuit (FPC), a tape, a touch panel and a protection film for an optical disk.

[Best Mode Carrying out the Invention]

Unless particularly stated otherwise herein, the term 'combination thereof means that two or more functional groups are bonded by a single bond, a double bond, a triple bond or a linking group such as a $C_{1-10}$ alkylene group (e.g., methylene group ($-CH_2$), ethylene group ($-CH_2CH_2-$), etc.), a $C_{1-10}$ fluoroalkylene group (e.g., fluoromethylene group ($-CF_2-$), a perfluoroethylene group ($-CF_2CF_2-$), etc.), a hetero atom such as N, O, P, S or Si, or a functional group containing thereof (e.g., intramolecular carbonyl group (-C=O-), ether group (-O-), ester group (-COO-), heteroalkylene group containing -S-, -NH-, -N=N-, etc.), or two or more functional groups are connected by condensation.
Polyimide is a polymer composed of rigid aromatic groups and imide bonds, thereby having excellent mechanical properties and heat resistance, and it is variously used in many industrial fields based on such characteristics. However, the existing polyimide may be yellowed because it absorbs light in part of visible light region by electron transfer in chains

and between chains, and the yellowness may hinder possibility as a highly heat resistant and transparent material for a display. This yellowness may be caused by charge transfer complex, and it may be more severely occurred as more packing is happened between the polyimide polymer chains.

In order to solve these existing problems,

the present invention provides polyamide-imide containing a repeating structure of the following Chemical Formula 1a, a repeating structure of the following Chemical Formula 1b and a repeating structure of the following Chemical Formula 1c together, wherein the repeating structure of Chemical Formula 1b is contained in an amount of from 5 mol% to 20 mol%, based on the total amount of the repeating structure of Chemical Formula 1a and the repeating structure of Chemical Formula 1b:

[Chemical Formula 1a]

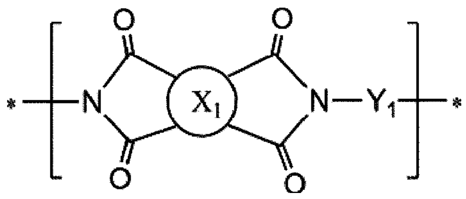

[Chemical Formula 1b]

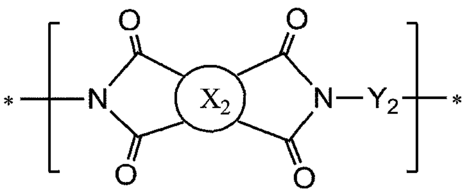

[Chemical Formula 1c]

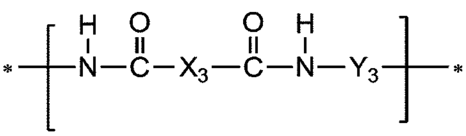

wherein,

$X_1$ is a tetravalent organic group of the following Chemical Formula 2 derived from tetracarboxylic dianhydride:

[Chemical Formula 2]

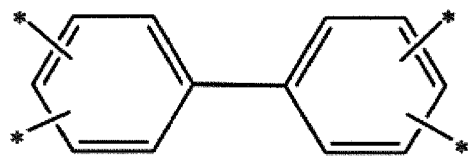

$X_2$ is a tetravalent organic group of the following Chemical Formula 3 derived from tetracarboxylic dianhydride, wherein the tetracarboxylic dianhydride of Chemical Formula 3 is contained in an amount of from 5 mol% to 15 mol%, based on the total amount of the tetracarboxylic dianhydride of Chemical Formula 2 and the tetracarboxylic dianhydride of Chemical Formula 3,

[Chemical Formula 3]

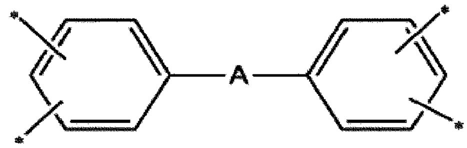

wherein,

A is $-CR_{15}R_{16}-$, wherein $R_{15}$ and $R_{16}$ may be each independently selected from a $C_{1-10}$ fluoroalkyl group,
$X_3$ is a divalent organic group derived from the compound of the following Chemical Formula 4,

[Chemical Formula 4]

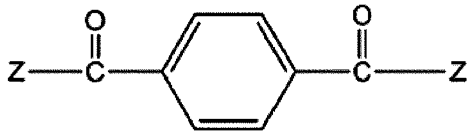

wherein,

Z is each independently one selected from a hydroxyl group (-OH), a halide group selected from -Cl, -Br, -F and -I, and a $C_{1-5}$ alkoxyl group (-OR),
$Y_1$, $Y_2$ and $Y_3$ are each independently a divalent organic group derived from diamine, and at least one thereof contains a divalent organic group of the following Chemical Formula 5:

[Chemical Formula 5]

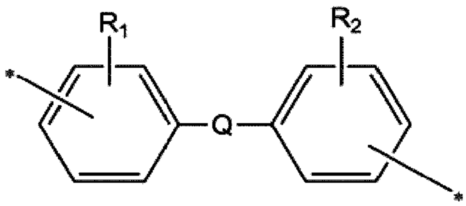

wherein,

$R_1$ and $R_2$ are each independently a substituent selected from a halogen atom selected from the group consisting of -F, -Cl, -Br and -I, a hydroxyl group (-OH), a thiol group (-SH), a nitro group ($-NO_2$), a cyano group, a $C_{1-10}$ alkyl group, a $C_{1-4}$ halogenoalkoxyl group, a $C_{1-10}$ halogenoalkyl group, and a $C_{6-20}$ aryl group,
Q may be selected from the group consisting of a single bond, -O-, - $CR_{18}R_{19}$-, -C(=O)-, -C(=O)O-, -C(=O)NH-, -S-, $-SO_2-$, a phenylene group and a combination thereof, wherein $R_{18}$ and $R_{19}$ may be each independently selected from the group consisting of a hydrogen atom, a $C_{1-10}$ alkyl group and a $C_{1-10}$ fluoroalkyl group.

According to the present invention, polyamide chain may be introduced into the polyimide main chain. The resulting polymer has excellent mechanical properties and heat resistance like polyimide, and may improve optical characteristics because it can prevent packing between polymer chains and reduce charge transfer during copolymerization with the polyimide.

Further, the present invention provides a method for manufacturing the polyamide-imide comprising the steps of:

stirring a solution of diamine containing the structure of the following Chemical Formula 5;
reacting tetracarboxylic dianhydride containing tetravalent organic groups of the following Chemical Formula 2 and Chemical Formula 3, and the compound of the following Chemical Formula 4 with the diamine solution to prepare a polyamide-imide precursor; and
imidizing the polyamide-imide precursor,

wherein the amount of the tetracarboxylic dianhydride of Chemical Formula 3 is from 5 mol% to 15 mol%, based on the total amount of the tetracarboxylic dianhydride containing the structures of Chemical Formula 2 and Chemical Formula 3:

[Chemical Formula 2]

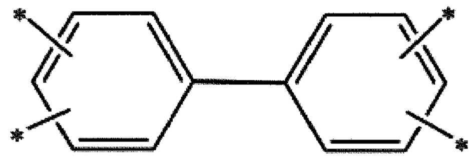

[Chemical Formula 3]

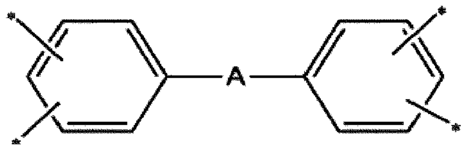

wherein,

A is $-CR_{18}R_{19}-$, wherein $R_{18}$ and $R_{19}$ may be each independently selected from a $C_{1-10}$ fluoroalkyl group,

[Chemical Formula 4]

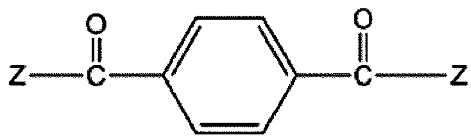

wherein,

Z is each independently one selected from a hydroxyl group (-OH), a halide group selected from -Cl, -Br, -F and -I, and a $C_{1-5}$ alkoxyl group (-OR),

[Chemical Formula 5]

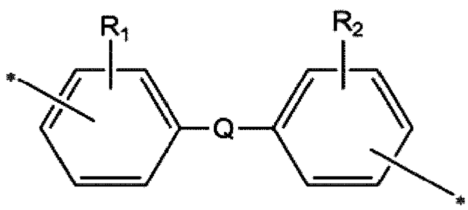

wherein,

$R_1$ and $R_2$ are each independently a substituent selected from a halogen atom selected from the group consisting of -F, -Cl, -Br and -I, a hydroxyl group (-OH), a thiol group (-SH), a nitro group ($-NO_2$), a cyano group, a $C_{1-10}$ alkyl group, a $C_{1-4}$ halogenoalkoxyl group, a $C_{1-10}$ halogenoalkyl group, and a $C_{6-20}$ aryl group, Q may be selected from the group consisting of a single bond, -O-, - $CR_{18}R_{19}$-, -C(=O)-, -C(=O)O-, -C(=O)NH-, -S-, $-SO_2-$, a phenylene group and a combination thereof, wherein $R_{18}$ and $R_{19}$ may be each independently selected from the group consisting of a hydrogen atom, a $C_{1-10}$ alkyl group and a $C_{1-10}$ fluoroalkyl group.

According to one embodiment, the compound of Chemical Formula 2 may be selected from tetracarboxylic dianhydrides having structures of the following Chemical Formulas 2a to 2e.

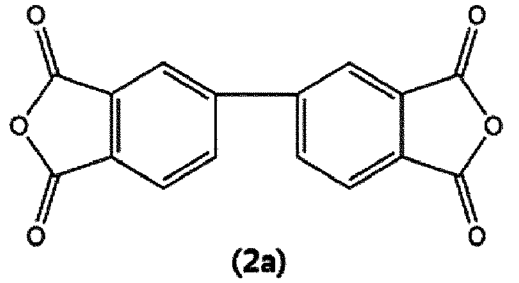

(2a)

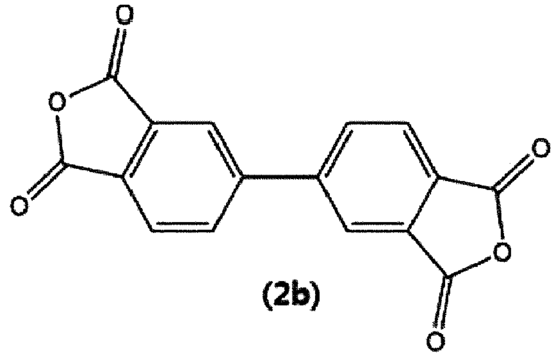

(2b)

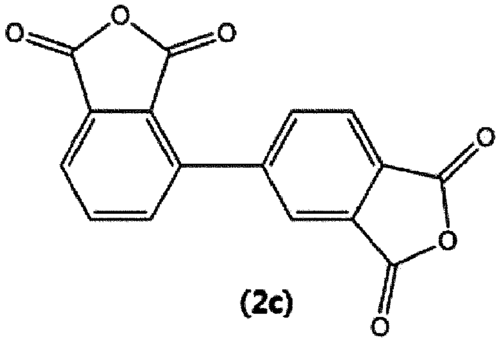

(2c)

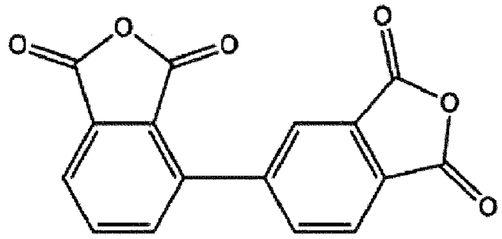

(2d)

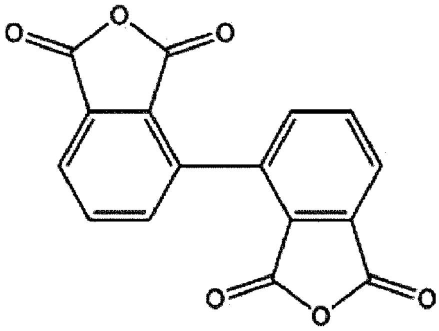

(2e)

According to one embodiment, the tetravalent organic group of Chemical Formula 3 may be selected from the compounds of the following Chemical Formula 3f.

The acid dianhydride of Chemical Formula 3 is contained in an amount of from 5 mol% to 15 mol%, based on the total amount of the whole acid dianhydride, i.e., the total amount of the acid dianhydride of Chemical Formula 2 and the acid dianhydride of Chemical Formula 3.

According to one embodiment, the compound of Chemical Formula 4 may be dicarboxyl dichloride of the following Chemical Formula 4a or dicarboxylic acid of the following Chemical Formula 4b.

[Chemical Formula 4a]

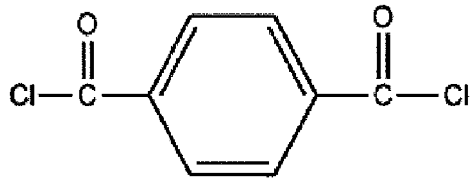

[Chemical Formula 4b]

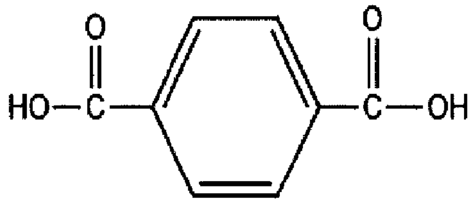

For example, the compound of Chemical Formula 5 may be selected from the compounds of the following Chemical Formulas 5a to 5d.

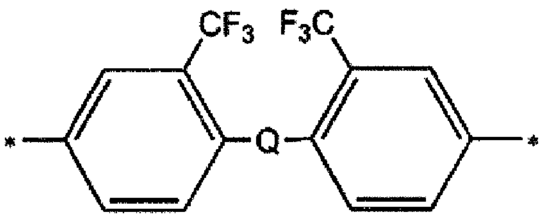

(5a)

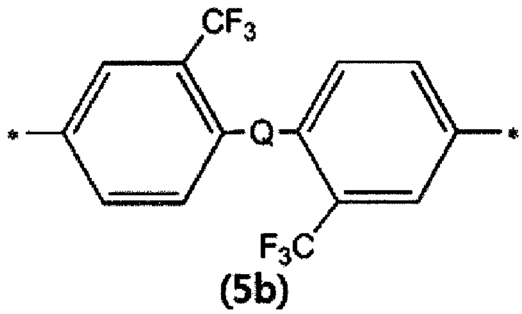

(5b)

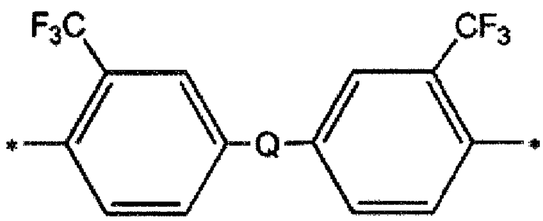

(5c)

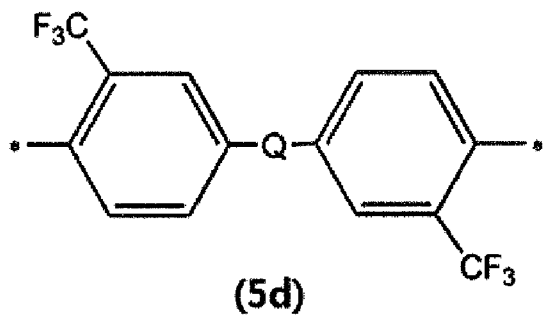

(5d)

According to one embodiment, imidization rate of the structure containing Chemical Formulas 1a and 1b may be 80% to 100%, preferably 90% to 100%.

According to the present invention, in Chemical Formula 1a to Chemical Formula 1b,

the repeating structures of Chemical Formulas 1a and 1b and the repeating structure of Chemical Formula 1c may be contained at a molar ratio of 1:5 to 2:1, preferably at a molar ratio of 1:5 to 1:2, more preferably at a molar ratio of 1:5 to 1:3. Namely, the tetracarboxylic dianhydride containing the tetravalent organic groups of Chemical Formula 2 and Chemical Formula 3 and the compound of Chemical Formula 4 may be reacted at a molar ratio of 1:5 to 2:1. Preferably, the compounds may be added at a molar ratio of 1:5 to 1:2, more preferably at a molar ratio of 1:5 to 1:3, and reacted with the diamine of Chemical Formula 5 to prepare a polyamide-imide precursor. At this time, if the compound of Chemical Formula 4 is reacted in an amount of 90 mol% or more, preferably 85 mol% or more, processability may be deteriorated, i.e., it may be difficult to manufacture a film due to increased viscosity by gelation of a polymerization solution, and therefore, optical characteristics such as transparency of the film thus obtained may be affected due to its deteriorated uniformity. Further, if the tetracarboxylic dianhydride is contained in an amount of 70 mol% or more, or 60 mol% or more, there may be a problem that chains of the precursor may be degraded because the polyamic acid structure is vulnerable to moisture, and the problem may cause deterioration of mechanical properties or the film.

According to one embodiment, the polyamide-imide may further contain a repeating unit formed by polymerization of anhydride and diamine. The anhydride which can be used in the present invention may be bicycloheptene dicarboxylic anhydride (Nadicanhydride), anthracenylethynyl phthalic anhydride (4-(9-anthracenyl ethynyl)phthalic anhydride), adamantanecarbonyl chloride (1-Adamantanecarbonyl chloride), adamantanedicarbonyl dichloride (1,3-Adamantanedicarbonyl dichloride), norbornenecarbonyl chloride (5-Norbornene-2-carbonyl chloride), norbornenedicarbonyl chloride (5-Norbornene-2, 3 -dicarbonyl chloride), cyclopentanecarbonyl chloride (cyclopentane chloride) and the like, and the anhydride may be contained in an amount of 10 mol% or less, based on the total mole of the acid dianhydride of Chemical Formulas 2 and 3 and the anhydride.

According to one embodiment, the polyamide-imide according to the present invention is a random copolymer wherein its repeating structures are randomly arranged. This arrangement may prevent charge transfer and regular arrangement in chains, and it may minimize partial crystallization by hydrogen bonds between chains of the polyamide. Thus, a polyamide-imide film having better transparency can be obtained.

By introducing a polyamide group to the existing polyimide structure, the present invention can provide more colorless transparent polyamide-imide having excellent heat resistance and mechanical properties because the polyamide group may increase distance between chains and therefore prevent charge transfer complex caused by packing and minimize yellowness caused by the charge transfer complex.

Further, by introducing a substituent having high electronegativity such as $R_1$ and $R_2$ to the diamine structure, the packing between chains can be suppressed by the substituent size, and also the charge movement between chains and in chains can be inhibited, thereby minimizing the charge transfer. Therefore, the present invention can provide polyamide-imide having highly enhanced optical properties such as yellowing caused by the charge transfer.

For example, the polyamide-imide according to the present invention may contain repeating structures of the following Chemical Formula 1a-1 to 1c-1.

[Chemical Formula 1a-1]

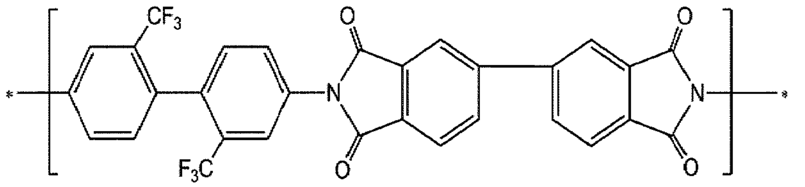

[Chemical Formula 1b-1]

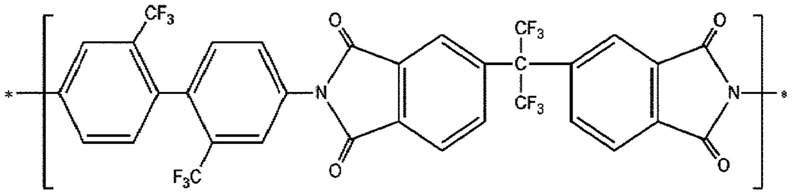

[Chemical Formula 1c-1]

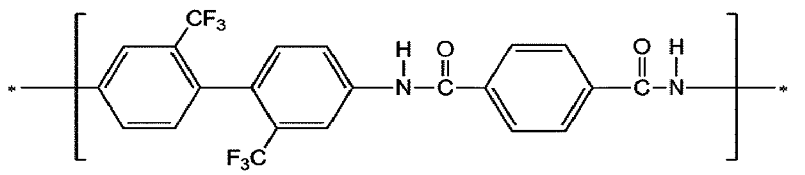

In the repeating structures of the polyamide-imide of the present invention, at least one repeating structure may include a divalent organic group and/or tetravalent organic group containing a fluorine-based substituent. Herein, the term 'fluorine-based substituent' means not only 'fluorine atom substituent' but also 'substituent containing a fluorine atom'. The fluorine-based substituent may be a $C_{1-10}$, preferably $C_{1-6}$ fluoroalkyl, and it may be contained in an amount of 30 mol% or more, preferably 40 mol% or more, or 60 mol% or more, and up to 100 mol%, preferably 90 mol% or less, or 80 mol% or less, based on the repeating structures of the whole polyamide-imide precursor.

The reaction of the tetracarboxylic dianhydride and the dicarboxylic acid or the dicarboxyl chloride with the diamine may be carried out by any common polymerization method such as solution polymerization, for manufacturing the polyamide-imide precursor, and specifically, the precursor may be manufactured by dissolving the diamine in an organic solvent, adding the tetracarboxylic dianhydride and the dicarboxylic acid or the dicarboxyl chloride to the resulting solution followed by polymerizing thereof. At this time, the total amount of the tetracarboxylic dianhydride and the dicarboxylic acid or the dicarboxyl chloride and the diamine may be mixed at a molar ratio of 1:1.1 to 1.1:1 or 1:1.05 to 1.05:1 to obtain preferable molecular weight, mechanical properties and viscosity.

The reaction may be performed under inert gas or nitrogen atmosphere, and also performed under anhydrous condition.

Further, the polymerization may be performed at a temperature of -20°C to 60°C, preferably 0°C to 30°C.

Further, the organic solvent which can be used for the polymerization may be, specifically, selected from the group consisting of ketones such as γ-butyrolactone, 1,3-dimethyl-imidazolidinone, methylethyl ketone, cyclohexanone, cyclopentanone, 4-hydroxy-4-methyl-2-pentanone and the like; aromatic hydrocarbons such as toluene, xylene, tetramethylbenzene and the like; glycol ethers (cellosolve) such as ethyleneglycol monoethyl ether, ethyleneglycol monomethyl ether, ethyleneglycol monobutyl ether, diethyleneglycol monoethyl ether, diethyleneglycol monomethyl ether, diethyleneglycol monobutyl ether, propyleneglycol monomethyl ether, propyleneglycol monoethyl ether, dipropyleneglycol diethyl ether, triethyleneglycol monoethyl ether and the like; ethyl acetate, butyl acetate, ethyleneglycol monoethyl ether acetate, ethyleneglycol monobutyl ether acetate, diethyleneglycol monoethyl ether acetate, dipropyleneglycol monomethyl ether acetate, ethanol, propanol, ethyleneglycol, propyleneglycol, carbitol, dimethyl acetamide (DMAc), N,N-diethyl acetamide, dimethyl formamide (DMF), diethyl formamide (DEF), N-methyl pyrrolidone (NMP), N-ethyl pyrrolidone (NEP), 1,3-dimethyl-2-imidazolidinone, N,N-dimethylmethoxy acetamide, dimethyl sulfoxide, pyridine, dimethyl sulfone, hexamethyl phosphoramide, tetramethyl urea, N-methyl caprolactam, tetrahydrofuran, m-dioxane, P-dioxane, 1,2-dimethoxyethane, bis(2-methoxyethyl)ether, 1,2-bis(2-methoxyethoxy)ethane, bis[2-(2-methoxyethoxy)]ether, and a mixture thereof.

More preferably, the solvent may be a sulfoxide-based solvent such as dimethyl sulfoxide, diethyl sulfoxide and the like; a formamide-based solvent such as N,N-dimethyl formamide, N,N-diethyl formamide and the like; an acetamide-based solvent such as N,N-dimethyl acetamide, N,N-diethyl acetamide and the like; a pyrrolidone-based solvent such as N-methyl-2-pyrrolidone, N-vinyl-2-pyrrolidone and the like; a phenol-based solvent such as phenol, o-, m- or p-cresol, xylenol, halogenated phenol, catechol and the like; or hexamethyl phosphoramide, γ-butyrolactone and the like, and the solvent may be used alone or as a mixture thereof, but not limited thereto. An aromatic hydrocarbon such as xylene and toluene may be further used, and in order to accelerate dissolution of the polymer, an alkali metal salt or alkali earth metal salt may be further added to the solvent in an amount of about 50 wt% or less, based on the total amount of the solvent.

The polyamide-imide precursor composition manufactured by the method may contain the solid component in such an amount that the composition has an appropriate viscosity considering its film formation processability such as coatability. According to one embodiment, the content of the composition may be controlled to have the total content of the polymer of 5 to 25 wt%, preferably 5 to 20 wt%, more preferably 5 to 20 wt% or 5 to 15 wt%.

Further, the content of the composition may be controlled such that the polyamide-imide precursor composition has viscosity of 500 cP or higher or 1,000 cP or higher, preferably 3,000 cP or higher, and the viscosity of the polyamide-imide precursor composition may be controlled to 30,000 cP or lower or 20,000 cP or lower, preferably 18,000 cP or lower or 15,000 cP or lower. If the viscosity of the polyamide-imide precursor composition is lower than 500 cP or higher than 30,000 cP, optical properties of the polyamide-imide film may be deteriorated due to bubble formation during the film processing and bad surface profile.

Further, the polyamide-imide according to the present invention may have a weight average molecular weight of 10,000 to 200,000 g/mol, 20,000 to 100,000 g/mol or 30,000 to 100,000 g/mol.

Further, the polyamide-imide according to the present invention may have a molecular weight distribution (Mw/Mn) of 1.1 to 2.5, preferably. If the imidization rate, weight average molecular weight or molecular weight distribution of the polyamide-imide is out of the range defined above, there may be a difficulty in forming the film or there is a risk that the characteristics of the film such as transmittance, heat resistance and mechanical properties may be deteriorated.

The polyamide-imide precursor composition may be in the form of a solution dissolved in an organic solvent, and in this case, for example, when the polyamide-imide precursor is synthesized in the organic solvent, the solution may be the reaction solution thus obtained itself or a solution obtained by diluting the reaction solution with another solvent. Further, when the polyamide-imide precursor is obtained as powder, the solution may be a solution obtained by dissolving the powder in an organic solvent.

Further, when preparing the solution by dissolving the polymer powder in an organic solvent, the reaction may be conducted by heating at a temperature of, preferably, 20°C to 150°C, more preferably, 20°C to 80°C.

Subsequently, the resulting polyamide-imide precursor thus obtained from the polymerization is imidized to manufacture a transparent polyamide-imide film. Specifically, the imidization process may be a chemical imidization or thermal imidization method.

For example, the polyamide-imide may be obtained by adding a dehydrating agent and an imidization catalyst to the polymerized polyamide-imide precursor solution, and then heating thereof to a temperature of 50°C to 100°C for imidization by chemical reaction, or refluxing the solution to remove alcohol for imidization.

In the chemical imidization method, the imidization catalyst may be pyridine, triethyl amine, picoline or quinoline, and also, a substituted or unsubstituted nitrogen-containing heterocyclic compound, an N-oxide compound of a nitrogen-containing heterocyclic compound, a substituted or unsubstituted amino acid compound, or an aromatic hydrocarbon compound or an aromatic heterocyclic compound having a hydroxyl group. Particularly, it may be a lower alkylimidazole such as 1,2-dimethylimidazole, N-methylimidazole, N-benzyl-2-methylimidazole, 2-methylimidazole, 2-ethyl-4-methylimidazole, 5-methylbenzimidazole and the like; an imidazole derivative such as N-benzyl-2-methylimidazole and the

like; a substituted pyridine such as isoquinoline, 3,5-dimethylpyridine, 3,4-dimethylpyridine, 2,5-dimethylpyridine, 2,4-dimethylpyridine, 4-n-propylpyridine and the like, p-toluene sulfonic acid and the like.

The dehydrating agent may be an acid anhydride such as acetic acid anhydride.

Further, the imidization may be thermally conducted by coating the precursor solution on a substrate followed by heating thereof in an oven or on a hot plate under a condition of 100°C to 300°C, and the heating may be conducted in a multi-step process at various temperatures within the said temperature range.

The organic solvent contained in the polyamide-imide precursor composition of the present invention may be the same with the polymerization solvent.

In the present invention, a silane coupling agent, a crosslinkable compound, an imidization catalyst for effectively proceeding imidization and the like may be added without negatively affecting the desired effect.

A polyamide-imide film having excellent mechanical properties as well as colorless transparency can be manufactured by introducing a polyamide structure to a rigid polyimide molecular structure to increase distance between chains thereby reducing packing between chains, and by combining a substituent having high electronegativity to a diamine structure to reduce charge transfer.

Further, the polyamide-imide-based film may be a colorless transparent polyamide-imide film having a haze of 2 or less, preferably 1.5 or less, a transmittance of at least 80% to light at a wavelength of 380 nm to 760 nm in the film thickness of 10 μm to 30 μm, and a yellowness index (YI) of about 10 or less, preferably about 7 or less, more preferably about 5.5 or less. The film can exhibit markedly improved transparency and optical properties due to its excellent light transmittance and yellowness index.

Further, the polyamide-imide-based film may be an anisotropic film having an in-plane retardation ($R_{in}$) of about 0 to about 100 nm and a thickness retardation ($R_{th}$) of at least about 200 nm, or an in-plane retardation ($R_{in}$) of about 0 to about 70 nm and a thickness retardation ($R_{th}$) of at least about 300 nm.

Further, the polyamide-imide-based film may have a modulus of at least about 5.0 GP, or about 5 to about 9 GPa. Surface hardness can be measured three times per pencil under a load of 750 gf using a pencil hardness tester according to the measuring standard JIS K5400, and then degrees of scratch and dent can be observed to determine hardness. The film may have surface hardness of HB or higher, or F or higher, preferably H or higher, more preferably 2H or higher.

The polyamide-imide film according to present invention may have coefficient of thermal expansion (CTE) of 15 ppm/°C or lower at 50°C to 300°C, and solvent resistance index defined as the following Formula 1 of 2% or lower:

[Formula 1]

$$\text{Solvent resistance index (\%)} = (T_0 - T_{10})/T_0 \times 100$$

wherein, $T_{10}$ is film thickness after immersing the film in a polar solvent for 10 min, and $T_0$ is film thickness before immersing the film in a polar solvent.

Thus, in another embodiment of the present invention, an article comprising the polyamide-imide copolymer is provided.

The article maybe a film, a fiber, a coating material, an adhesive and the like, but not limited thereto. The article may be formed by a dry/wet method, a dry method, a wet method and the like using a composite composition of the copolymer and inorganic particles, but not limited thereto. Specifically, as described above, the article may be an optical film, and in the case, the composition comprising the polyamide-imide copolymer may be easily manufactured by being applied on a substrate through a spin coating method followed by being dried and cured.

The polyamide-imide according to the present invention can have excellent colorless transparent characteristic while maintaining characteristics such as heat resistance, mechanical strength and the like due to its rigid structure. Thus, it can be used in various fields such as a substrate for a device, a cover substrate for a display, an optical film, an integrated circuit (IC) package, an adhesive film, a multi-layer flexible printed circuit (FPC), a tape, a touch panel, a protection film for an optical disk and the like, and particularly, it can be suitable for a cover substrate for a display.

According to another embodiment of the present invention, a display device comprising the article is provided. Specifically, the display device may be a liquid crystal display device (LCD), an organic light emitting diode (OLED) and the like, but not limited thereto.

[Mode for Invention]

The present invention will be explained in detail with reference to the following examples, including test examples. However, these examples are provided for illustrative purposes only and are not intended to limit the scope of the invention.

<Example 1> TFMB(1)/BPDA(0.18)_6FDA(0.02)_TPC(0.8)

N,N-dimethyl acetamide (DMAc) 250 g was filled in a reactor under nitrogen atmosphere, and then 2,2'-bis(trifluoromethyl)-4,4'-biphenyl diamine (TFMB) 21.7 g was dissolved while maintaining the temperature of the reactor to 25°C. 3,3',4,4'-biphenyltetracarboxylic dianhydride (BPDA) 3.6 g and 4,4'-(Hexafluoroisopropylidene)diphthalic anhydride (6FDA) 0.6 g were added to the TFMB solution at the same temperature, and dissolved with stirring for a predetermined period of time. After enough stirring, the temperature was lowered to 0°C, terephthaloyl chloride (TPC) 11 g was added thereto and stirring was continued to obtain a polyamide-imide precursor solution.
Pyridine and acetic anhydride were added to the solution and stirred enough, and then precipitated with a mixture of methanol and water. The precipitated polyamide-imide powder was dried and dissolved in DMAc to obtain a polyamide-imide precursor solution of a solid content of 13 wt%.
The composition solution was spin coated on a glass substrate in thickness of about 30 μm. The precursor composition-coated glass substrate was placed in an oven, heated at a rate of 4°C/min, and then cured at 300°C. After completing the curing process, the film formed on the glass substrate was stripped from the substrate to obtain a film.

<Comparative Example 1> TFMB/BPDA(0.2)_TPC(0.8)

N,N-dimethyl acetamide (DMAc) 180 g was filled in a reactor under nitrogen atmosphere, and then 2,2'-bis(trifluoromethyl)-4,4'-biphenyl diamine (TFMB) 16.3 g was dissolved while maintaining the temperature of the reactor to 25°C. 3,3',4,4'-biphenyltetracarboxylic dianhydride (BPDA) 3 g was added to the TFMB solution at the same temperature, and dissolved with stirring for a predetermined period of time. After enough stirring, the temperature was lowered to 0°C, terephthaloyl chloride (TPC) 8.3 g was added thereto and stirring was continued to obtain a polyamide-imide precursor solution. Pyridine and acetic anhydride were added to the solution and stirred enough, and then precipitated with a mixture of methanol and water. The precipitated polyamide-imide powder was dried and dissolved in DMAc to obtain a polyamide-imide precursor solution of a solid content of 13 wt%.
The composition solution was spin coated on a glass substrate in thickness of about 30 μm. The precursor composition-coated glass substrate was placed in an oven, heated at a rate of 4°C/min, and then cured at 300°C. After completing the curing process, the film formed on the glass substrate was stripped from the substrate to obtain a film.

<Test Example 1 >

Optical properties such as yellow index (YI) and haze of each polyamide-imide film manufactured in Examples 1 and Comparative Example 1 were measured as follows, and the results are shown in the following Table 1.
Haze was measured using a Haze Meter HM-150 by a method according to ASTM D1003.
Yellowness index (YI) was measured using a color difference meter (Color Eye 7000A).

[Table 1]

| | BPDA(0.18)_6FDA(0.02)/TPC(0.8) Example 1 | BPDA(0.2)/TPC(0.8) Comparative Example 1 |
|---|---|---|
| Thickness (μm) | 37.6 | 32 |
| Curing Temperature (°C) | 300 | 300 |
| YI | 5.2 | 9.8 |
| Haze | 1.07 | 10 |

From the results of Example 1, it can be found that the polyamide-imide according to the present invention has not only excellent haze and yellowness index but also superior hardness.

<Test Example 2>

<Manufacture of copolymer polyamide-imide film >

The polyamide-imide powder of Example 1 and Comparative Example 1 was dissolved in N,N-dimethylacetamide (DMAc) to obtain a 13 wt% solution. The solution thus obtained was coated on a stainless plate, cast to the thickness of 400 μm, and dried using hot air of 130°C for 30 min, after which the resulting film was stripped from the stainless plate and then fixed to a frame with pins. The film-fixed frame was placed in a vacuum oven, slowly heated from 100°C

to 300°C for 2 hours, and then slowly cooled, and a polyamide-imide film was separated from the frame and then subjected to final thermal treatment at 300°C for 30 min.

<Coefficient of thermal expansion (CTE)>

Coefficient of thermal expansion was measured two times using TMA (Perkin Elmer, Diamond TMA) in the temperature range between 50°C and 300°C according to TMA-Method, and at this time, heating rate was 10°C/min and load of 100 mN was applied. The first value was excluded and the second value was presented. Namely, because there may be residual stress in the film after film forming and heat treatment, the residual stress was completely removed through the first run and then the second value was presented as an actual measurement value.

<Measurement of Thickness and Solvent Resistance Index >

A polyamide-imide film was dried in an 80°C vacuum oven for 1 hour, and then thickness of the film was measured at five random points. The film was immersed again in a beaker containing DMAc for 10 min, washed with water, dried in the 80°C vacuum oven for 1 hour, and then thickness of the film was measured at five random points. Then, using the thickness of the film before and after the solvent immersion, solvent resistance index defined as the following Formula 1 was calculated.

[Formula 1]

$$\text{Solvent resistance index (\%)} = (T_0 - T_{10})/T_0 \times 100$$

wherein, $T_{10}$ is film thickness after immersing the film in a polar solvent for 10 min, and $T_0$ is film thickness before immersing the film in a polar solvent.

Thickness was measured with Anritsu Electronic Micrometer, and deviation of the device was ±0.5% or lower.

[Table 2]

| | Example 1 | Comparative Example 1 |
|---|---|---|
| Thickness (μm) | 70 | 100 |
| CTE (ppm/°C) | 13 | 52 |
| Solvent resistance index (%) | 1.5 | 3.7 |

## Claims

1. Polyamide-imide containing a repeating structure of the following Chemical Formula 1a, a repeating structure of the following Chemical Formula 1b and a repeating structure of the following Chemical Formula 1c together, wherein the repeating structure of Chemical Formula 1b is contained in an amount of from 5 mol% to 20 mol%, based on the total amount of the repeating structure of Chemical Formula 1a and the repeating structure of Chemical Formula 1b:

[Chemical Formula 1a]

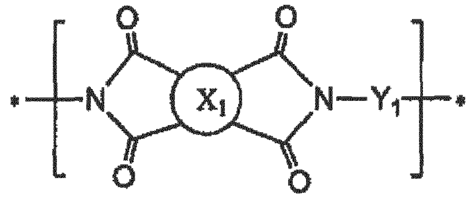

[Chemical Formula 1b]

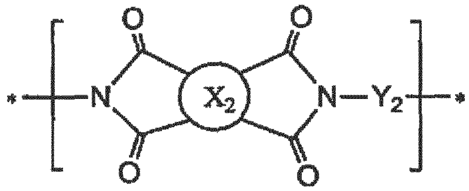

[Chemical Formula 1c]

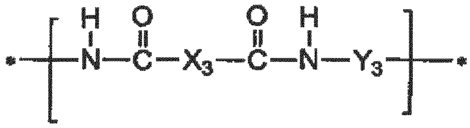

wherein,

$X_1$ is a tetravalent organic group of the following Chemical Formula 2 derived from tetracarboxylic dianhydride:

[Chemical Formula 2]

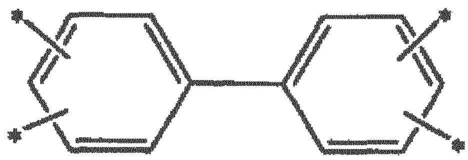

$X_2$ is a tetravalent organic group of the following Chemical Formula 3 derived from tetracarboxylic dianhydride, wherein the tetracarboxylic dianhydride of Chemical Formula 3 is contained in an amount of from 5 mol% to 15 mol%, based on the total amount of the tetracarboxylic dianhydride of Chemical Formula 2 and the tetracarboxylic dianhydride of Chemical Formula 3,

[Chemical Formula 3]

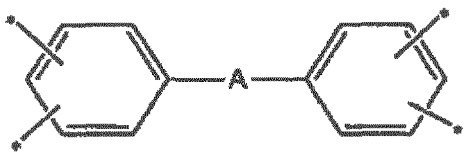

wherein,

A is $-CR_{15}R_{16}-$, wherein $R_{15}$ and $R_{16}$ may be each independently selected from a $C_{1-10}$ fluoroalkyl group, $X_3$ is a divalent organic group derived from the compound of the following Chemical Formula 4,

[Chemical Formula 4]

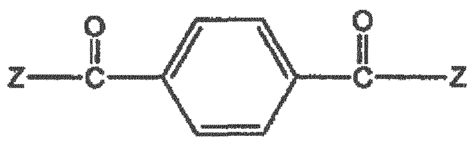

wherein,

Z is each independently one selected from a hydroxyl group (-OH), a halide group selected from -Cl, -Br, -F and -I, and a $C_{1-5}$ alkoxyl group (-OR),

$Y_1$, $Y_2$ and $Y_3$ are each independently a divalent organic group derived from diamine, and at least one

thereof contains a divalent organic group of the following Chemical Formula 5:

[Chemical Formula 5]

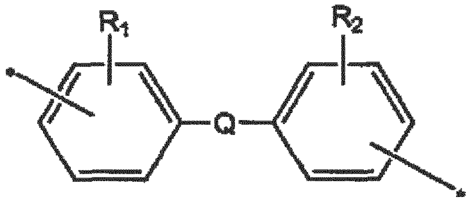

wherein,

$R_1$ and $R_2$ are each independently a substituent selected from a halogen atom selected from the group consisting of -F, -Cl, -Br and -I, a hydroxyl group (-OH), a thiol group (-SH), a nitro group ($-NO_2$), a cyano group, a $C_{1-10}$ alkyl group, a $C_{1-4}$ halogenoalkoxyl group, a $C_{1-10}$ halogenoalkyl group, and a $C_{6-20}$ aryl group,

Q is selected from the group consisting of a single bond, -O-, $-CR_{18}R_{19}-$, - C(=O)-, -C(=O)O-, -C(=O)NH-, -S-, $-SO_2-$, a phenylene group and a combination thereof, wherein $R_{18}$ and $R_{19}$ is each independently selected from the group consisting of a hydrogen atom, a $C_{1-10}$ alkyl group and a $C_{1-10}$ fluoroalkyl group.

2. The polyamide-imide according to claim 1, wherein the divalent organic group of Chemical Formula 5 is selected from the compounds of the following Chemical Formulas 5a to 5d.

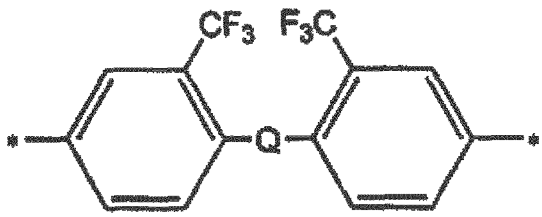

(5a)

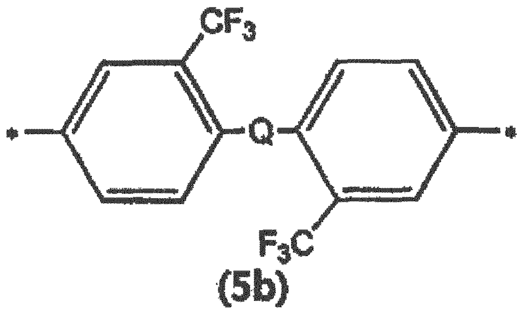

(5b)

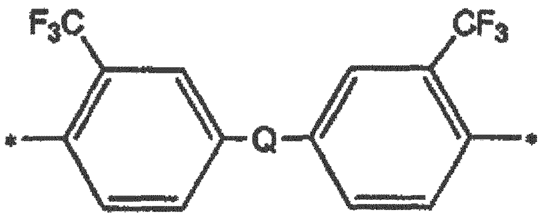

(5c)

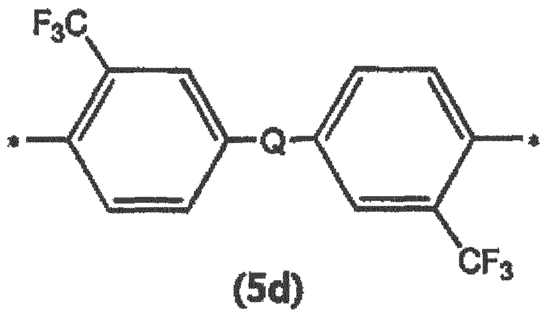

(5d)

3. The polyamide-imide according to claim 1, wherein the tetravalent organic group of Chemical Formula 3 is selected from the compounds of the following Chemical Formula 3f.

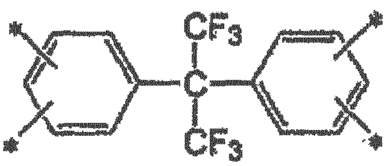

(3f)

4. The polyamide-imide according to claim 1, wherein the repeating structures of Chemical Formulas 1a and 1b and

the repeating structure of Chemical Formula 1c are contained at a molar ratio of 1:5 to 1:2.

**5.** The polyamide-imide according to claim 1, wherein the repeating structure of Chemical Formulas 1a, the repeating structure of Chemical Formula 1b and the repeating structure of Chemical Formula 1c are polymerized in the form of a random copolymer

**6.** The polyamide-imide according to claim 1, wherein the repeating structure of Chemical Formulas 1a to 1c contain repeating structures represented by the following Chemical Formulas 1a-1 to 1c-1.

[Chemical Formula 1a-1]

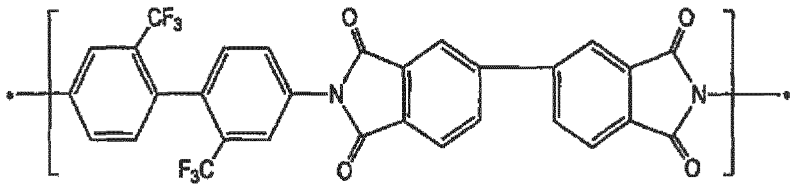

[Chemical Formula 1b-1]

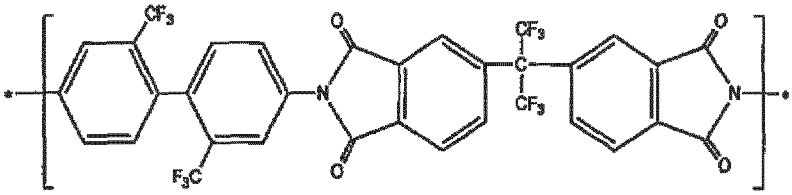

[Chemical Formula 1c-1]

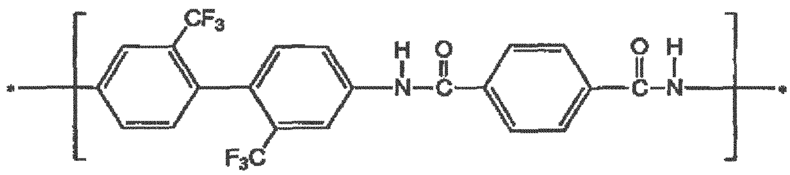

**7.** A method for manufacturing the polyamide-imide comprising the steps of:

stirring a solution of diamine containing the structure of the following Chemical Formula 5;
reacting tetracarboxylic dianhydride containing tetravalent organic groups of the following Chemical Formula 2 and Chemical Formula 3, and the compound of the following Chemical Formula 4 with the diamine solution to prepare a polyamide-imide precursor; and
imidizing the polyamide-imide precursor,
wherein the amount of the tetracarboxylic dianhydride of Chemical Formula 3 is from 5 mol% to 15 mol%, based on the total amount of the tetracarboxylic dianhydride containing the structures of Chemical Formula 2 and Chemical Formula 3:

[Chemical Formula 2]

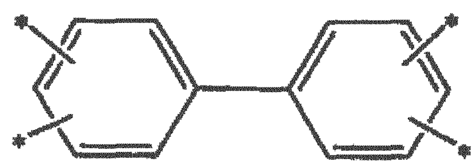

[Chemical Formula 3]

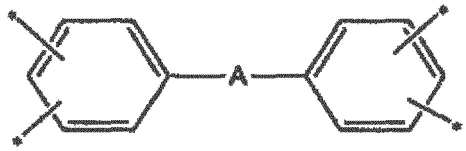

wherein,
A is $-CR_{15}R_{16}-$, wherein $R_{18}$ and $R_{19}$ may be each independently selected from a $C_{1-10}$ fluoroalkyl group,

[Chemical Formula 4]

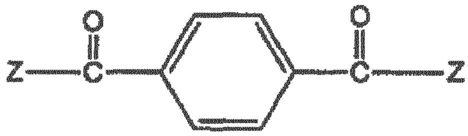

wherein,
Z is each independently one selected from a hydroxyl group (-OH), a halide group selected from -Cl, -Br, -F and -I, and a $C_{1-5}$ alkoxyl group (-OR),

[Chemical Formula 5]

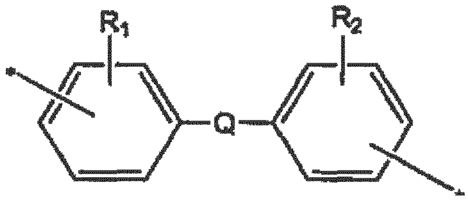

wherein,

$R_1$ and $R_2$ are each independently a substituent selected from a halogen atom selected from the group consisting of -F, -Cl, -Br and -I, a hydroxyl group (-OH), a thiol group (-SH), a nitro group ($-NO_2$), a cyano group, a $C_{1-10}$ alkyl group, a $C_{1-4}$ halogenoalkoxyl group, a $C_{1-10}$ halogenoalkyl group, and a $C_{6-20}$ aryl group,
Q is selected from the group consisting of a single bond, -O-, $-CR_{18}R_{19}-$, - C(=O)-, -C(=O)O-, -C(=O)NH-, -S-, $-SO_2-$, a phenylene group and a combination thereof, wherein $R_{18}$ and $R_{19}$ is each independently selected from the group consisting of a hydrogen atom, a $C_{1-10}$ alkyl group and a $C_{1-10}$ fluoroalkyl group.

**8.** The method for manufacturing the polyamide-imide according to claim 7, wherein the compounds of Chemical Formula 2, Chemical Formula 3 and Chemical Formula 4, and the diamine of Chemical Formula 5 are reacted at a molar ratio of 1:1.1 to 1.1:1.

**9.** The method for manufacturing the polyamide-imide according to claim 7, wherein the compound of Chemical Formula 5 is the compound of the following Chemical Formula 5a or Chemical Formula 5b:

[Chemical Formula 5a]

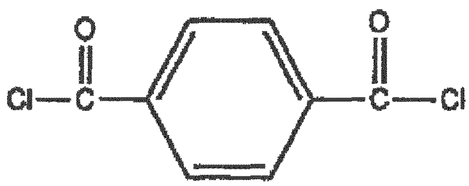

[Chemical Formula 5b]

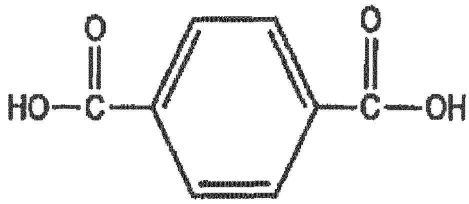

**10.** A polyamide-imide film comprising the polyamide-imide according to any one of claim 1 to claim 6.

**11.** The polyamide-imide film according to claim 10, which has Haze of 2 or lower.

**12.** The polyamide-imide film according to claim 10, which has yellowness index (YI) of 10 or lower.

**13.** The polyamide-imide film according to claim 10, which has a coefficient of thermal expansion (CTE) of 15 ppm/°C or lower at 50°C to 300°C, and a solvent resistance index defined as the following Formula 1 of 2% or lower:

[Formula 1]

$$\text{Solvent resistance index (\%)} = (T_0 - T_{10})/T_0 \times 100$$

wherein, $T_{10}$ is a film thickness after immersing the film in a polar solvent for 10 min, and $T_0$ is a film thickness before immersing the film in a polar solvent.

**Patentansprüche**

**1.** Polyamid-Imid, das eine Wiederholungseinheit der folgenden chemischen Formel 1a, eine Wiederholungseinheit der folgenden chemischen Formel 1b und eine Wiederholungseinheit der folgenden chemischen Formel 1c gemeinsam enthält, wobei die Wiederholungseinheit der chemischen Formel 1b in einer Menge von 5 Mol-% bis 20 Mol-%, bezogen auf die Gesamtmenge der Wiederholungseinheiten der chemischen Formel 1a und der sich wiederholenden Struktur der chemischen Formel ib, enthalten ist:

[Chemische Formel 1a]

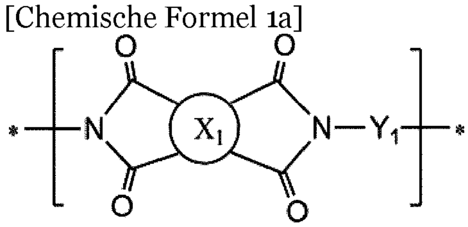

[Chemische Formel 1b]

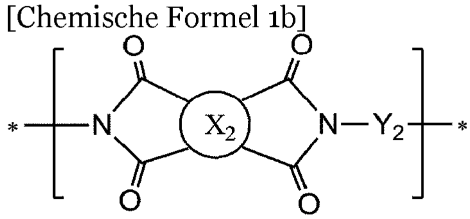

[Chemische Formel 1c]

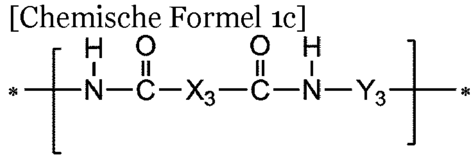

wobei,

$X_1$ eine tetravalente organische Gruppe der folgenden Chemischen Formel 2 ist, die von Tetracarbonsäuredianhydrid abgeleitet ist:

[Chemische Formel 2]

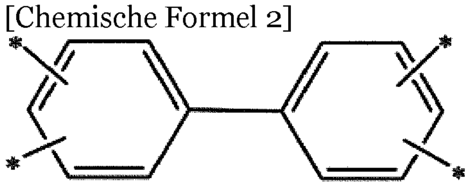

X2 eine tetravalente organische Gruppe der folgenden chemischen Formel 3 ist, die von Tetracarbonsäuredianhydrid abgeleitet ist, wobei das Tetracarbonsäuredianhydrid der chemischen Formel 3 in einer Menge von 5 Mol-% bis 15 Mol-% enthalten ist, bezogen auf die Gesamtmenge des Tetracarbonsäuredianhydrids der chemischen Formel 2 und des Tetracarbonsäuredianhydrids der chemischen Formel 3,

[Chemische Formel 3]

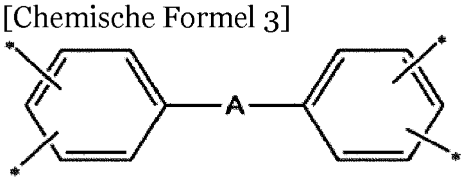

wobei,
A $-CR_{15}R_{16}-$ ist, wobei $R_{15}$ und $R_{16}$ jeweils unabhängig voneinander aus einer $C_{1-10}$-Fluoralkylgruppe ausgewählt sein können,
$X_3$ eine zweiwertige organische Gruppe ist, die sich von der Verbindung der folgenden chemischen Formel 4, ableitet,

[Chemische Formel 4]

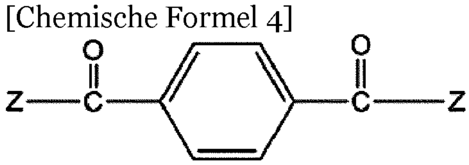

wobei,
Z jeweils unabhängig voneinander ausgewählt ist aus einer Hydroxylgruppe (-OH), einer Halogenidgruppe, ausgewählt aus -Cl, -Br, -F und -I, und einer $C_{1-5}$-Alkoxylgruppe (-OR),
$Y_1$, $Y_2$ und $Y_3$ jeweils unabhängig voneinander eine zweiwertige organische Gruppe sind, die sich von Diamin ableitet, und mindestens eines davon eine zweiwertige organische Gruppe der folgenden chemischen Formel 5 enthält:

[Chemische Formel 5]

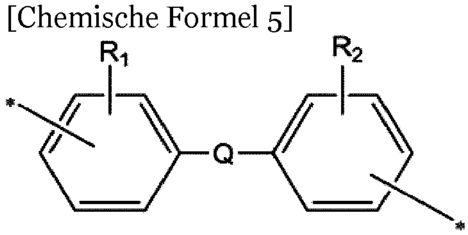

wobei,
$R_1$ und $R_2$ jeweils unabhängig voneinander ein Substituent sind, ausgewählt aus einem Halogenatom, das aus der Gruppe bestehend aus -F, -Cl, -Br und -I ausgewählt ist, einer Hydroxylgruppe (-OH), einer Thiolgruppe (-SH), einer Nitrogruppe (-N02), einer Cyanogruppe, einer $C_{1-10}$-Alkylgruppe, einer $C_{1-4}$-Halogenalkoxylgruppe, einer $C_{1-10}$-Halogenalkylgruppe und einer $C_{6-20}$-Arylgruppe,
Q ausgewählt ist aus der Gruppe bestehend aus einer Einfachbindung, -O-, $-CR_{18}R_{19}-$, -C(=0)-, -C(=0)0-, -C(=0)NH-, -S-, $-SO_2-$, einer Phenylengruppe und einer Kombination davon, wobei $R_{18}$ und $R_{19}$ jeweils unabhängig voneinander ausgewählt sind aus der Gruppe bestehend aus einem Wasserstoffatom, einer $C_{1-10}$-Alkylgruppe und einer $C_{1-10}$-Fluoralkylgruppe.

2. Polyamid-Imid nach Anspruch 1, bei dem die zweiwertige organische Gruppe der chemischen Formel 5 ausgewählt ist aus den Verbindungen der folgenden chemischen Formeln 5a bis 5d.

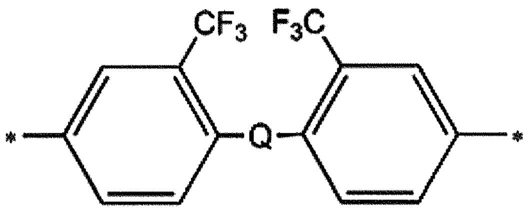

(5a)

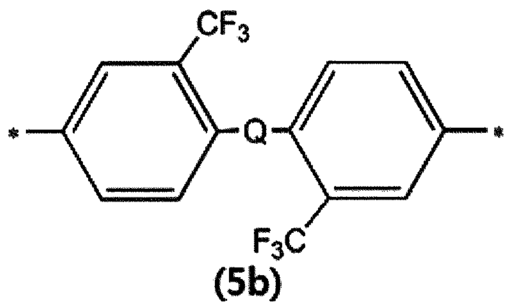

(5b)

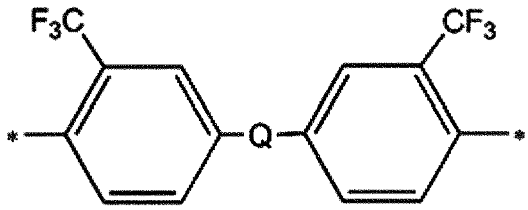

(5c)

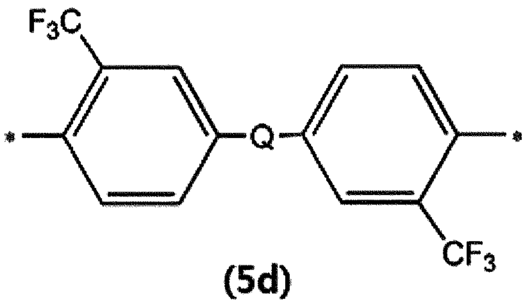

(5d)

3. Polyamid-Imid nach Anspruch 1, bei dem die vierwertige organische Gruppe der chemischen Formel 3 aus den Verbindungen der folgenden chemischen Formel 3f ausgewählt ist.

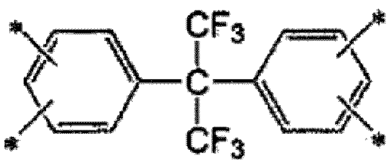

(3f)

4. Polyamid-Imid nach Anspruch 1, bei dem die Wiederholungseinheiten der chemischen Formeln 1a und 1b und die Wiederholungseinheit der chemischen Formel 1c in einem molaren Verhältnis von 1:5 bis 1:2 enthalten sind.

5. Polyamid-Imid nach Anspruch 1, bei dem die Wiederholungseinheit der chemischen Formeln 1a, die Wiederholungseinheit der chemischen Formel 1b und die Wiederholungseinheit der chemischen Formel 1c in Form eines statistischen Copolymers polymerisiert sind.

6. Polyamid-Imid nach Anspruch 1, bei dem die Wiederholungseinheit der chemischen Formeln 1a bis 1c Wiederholungseinheiten enthalten, die durch die folgenden chemischen Formeln 1a-1 bis 1c-1 dargestellt werden.

[Chemische Formel 1a-1]

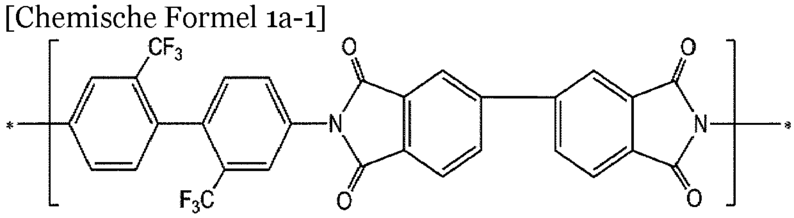

[Chemische Formel 1b-1]

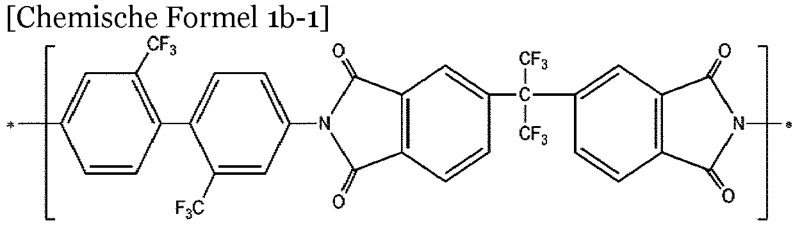

[Chemische Formel 1c-1]

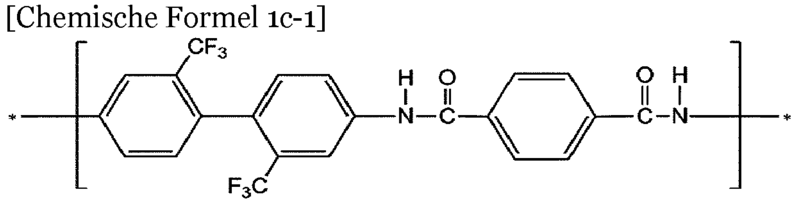

7. Verfahren zur Herstellung des Polyamid-Imids, das die Schritte umfasst, dass eine Lösung von Diamin, das die Struktur der folgenden chemischen Formel 5 enthält, gerührt wird;
Tetracarbonsäuredianhydrid, das vierwertige organische Gruppen der folgenden chemischen Formel 2 und chemischen Formel 3 enthält, und die Verbindung der folgenden chemischen Formel 4, mit der Lösung von Diamin umgesetzt werden, um einen Polyamid-Imid-Vorläufer herzustellen; und
der Polyamid-Imid-Vorläufer imidisiert wird,
wobei die Menge des Tetracarbonsäuredianhydrids der chemischen Formel 3 von 5 Mol-% bis 15 Mol-% beträgt, bezogen auf die Gesamtmenge des Tetracarbonsäuredianhydrids, das die Strukturen der chemischen Formel 2 und der chemischen Formel 3 enthält:

[Chemische Formel 2]

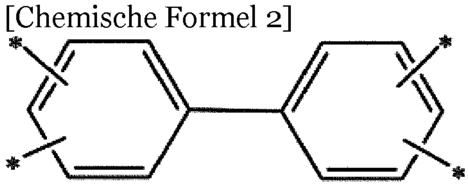

[Chemische Formel 3]

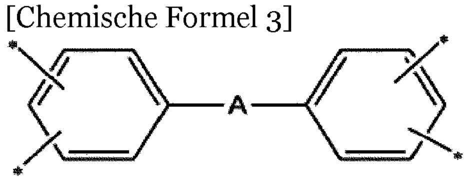

wobei,

A $-CR_{15}R_{16}-$ ist, wobei $R_{18}$ und $R_{19}$ jeweils unabhängig voneinander aus einer $C_{1-10}$-Fluoralkylgruppe ausgewählt sein können,

[Chemische Formel 4]

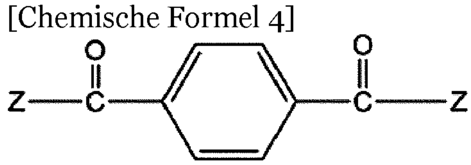

wobei,
Z jeweils unabhängig voneinander ausgewählt ist aus einer Hydroxylgruppe (-OH), einer Halogenidgruppe, die ausgewählt ist aus -Cl, -Br, -F und -I, und einer $C_{1-5}$-Alkoxylgruppe (-OR),

[Chemische Formel 5]

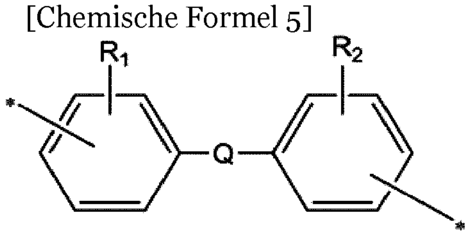

wobei,
$R_1$ und $R_2$ jeweils unabhängig voneinander ein Substituent sind, der ausgewählt ist aus einem Halogenatom, das ausgewählt ist aus der Gruppe bestehend aus -F, -Cl, -Br und -I, einer Hydroxylgruppe (-OH), einer Thiolgruppe (-SH), einer Nitrogruppe (-N02), einer Cyanogruppe, einer $C_{1-10}$-Alkylgruppe, einer $C_{1-4}$-Halogenalkoxylgruppe, einer $C_{1-10}$-Halogenalkylgruppe und einer $C_{6-20}$-Arylgruppe,
Q ausgewählt ist aus der Gruppe bestehend aus einer Einfachbindung, -O-, $-CR_{18}R_{19}-$, -C(=O)-, -C(=O)O-, -C(=0)NH-, -S-, $-SO_2-$, einer Phenylengruppe und einer Kombination davon, wobei $R_{18}$ und $R_{19}$ jeweils unabhängig voneinander ausgewählt sind aus der Gruppe bestehend aus einem Wasserstoffatom, einer $C_{1-10}$-Alkylgruppe und einer $C_{1-10}$-Fluoralkylgruppe.

**8.** Verfahren zur Herstellung des Polyamid-Imids nach Anspruch 7, bei dem die Verbindungen der chemischen Formel 2, der chemischen Formel 3 und der chemischen Formel 4; und das Diamin der chemischen Formel 5 in einem molaren Verhältnis von 1:1,1 bis 1,1:1 umgesetzt werden.

**9.** Verfahren zur Herstellung des Polyamid-Imids nach Anspruch 7, bei dem die Verbindung der chemischen Formel 5 die Verbindung der folgenden chemischen Formel 5a oder chemischen Formel 5b ist:

[Chemische Formel 5a]

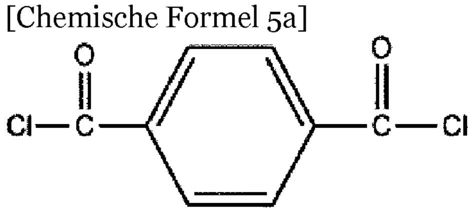

[Chemische Formel 5b]

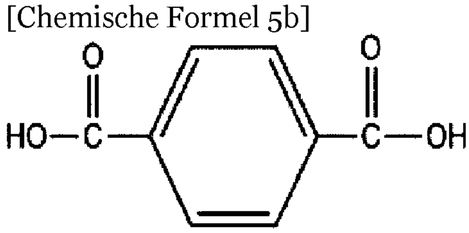

**10.** Polyamid-Imid-Film, der das Polyamid-Imid nach einem der Ansprüche 1 bis 6 umfasst.

**11.** Polyamid-Imid-Film nach Anspruch 10, der eine Trübung von 2 oder weniger aufweist.

**12.** Polyamid-Imid-Film nach Anspruch 10, der einen Vergilbungsindex (YI) von 10 oder weniger aufweist.

**13.** Polyamid-Imid-Film nach Anspruch 10, der einen Wärmeausdehnungskoeffizienten (CTE) von 15 ppm/°C oder weniger bei 50°C bis 300°C und einen Lösungsmittelbeständigkeitsindex, definiert als die folgende Formel 1, von 2 % oder weniger aufweist:

[Formel 1]

$$\text{Lösungsmittelbeständigkeitsindex (\%)} = (T_0-T_{10})/T_0 \times 100$$

wobei $T_{10}$ eine Filmdicke nach dem Eintauchen des Films in ein polares Lösungsmittel für 10 min ist, und $T_o$ eine Filmdicke vor dem Eintauchen des Films in ein polares Lösungsmittel ist.

## Revendications

**1.** Polyamide-amide contenant une structure répétitive de la formule chimique 1a suivante, une structure répétitive de la formule chimique 1b suivante et une structure répétitive de la formule chimique 1c suivante considérées ensemble, la structure répétitive de la formule chimique 1b étant contenue en une quantité de 5 % en moles à 20 % en moles par rapport à la quantité totale de la structure répétitive de la formule chimique 1a et de la structure répétitive de la formule chimique 1b :

[Formule chimique 1a]

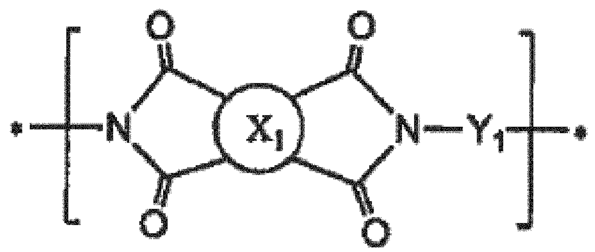

[Formule chimique 1b]

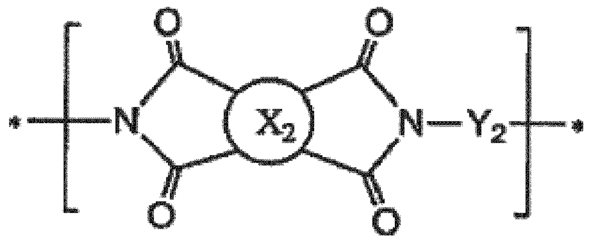

[Formule chimique 1c]

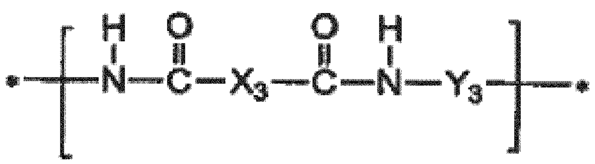

dans lesquelles formules,

$X_1$ représente un groupe organique tétravalent de la formule chimique 2 suivante dérivé du dianhydride tétracarboxylique :

[Formule chimique 2]

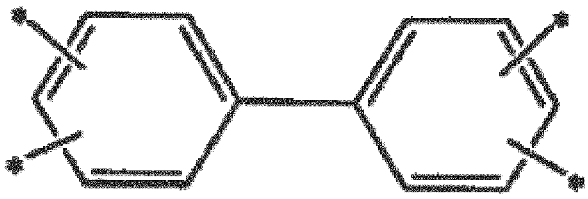

$X_2$ représente un groupe organique tétravalent de la formule chimique 3 suivante dérivé du dianhydride tétracarboxylique, le dianhydride tétracarboxylique de la formule 3 étant contenu en une quantité allant de 5 % en moles à 15 % en moles par rapport à la quantité totale du dianhydride tétracarboxylique de la formule chimique 2 et du dianhydride tétracarboxylique de la formule chimique 3,

[Formule chimique 3]

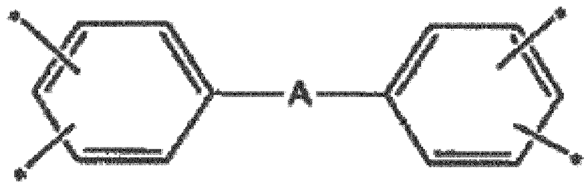

dans laquelle formule,
A représente $-CR_{15}R_{16}-$, où $R_{15}$ et $R_{16}$ peuvent être sélectionnés indépendamment dans un groupe fluoroalkyle en $C_1$ à $C_{10}$,
$X_3$ représente un groupe organique divalent dérivé du composé de la formule chimique 4 suivante,

[Formule chimique 4]

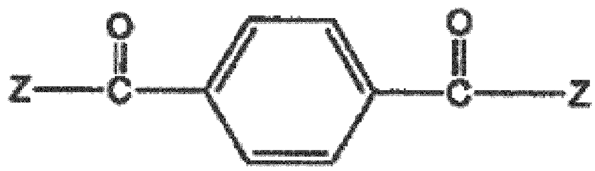

dans laquelle formule,
les Z représentent chacun indépendamment un groupe sélectionné dans un groupe hydroxyle (-OH), un groupe halogénure sélectionné parmi -Cl, -Br, -F et -I, et un groupe alcoxy en $C_1$ à $C_5$ (-OR),
$Y_1$, $Y_2$ et $Y_3$ représentent chacun indépendamment un groupe organique divalent dérivé de la diamine, et au moins un de ceux-ci contient un groupe organique divalent de la formule chimique 5 suivante :

[Formule chimique 5]

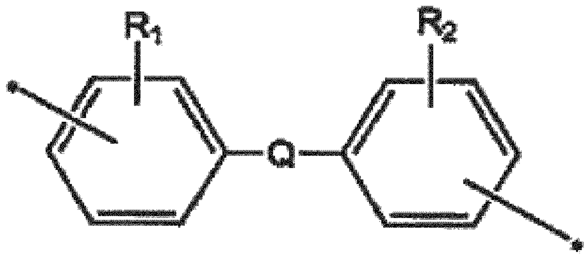

dans laquelle formule,

$R_1$ et $R_2$ représentent chacun indépendamment un substituant sélectionné parmi un atome d'halogène choisi dans le groupe constitué de -F, de -Cl, de -Br et de -I, d'un groupe hydroxyle (-OH), d'un groupe thiol (-SH), d'un groupe nitro ($-NO_2$), d'un groupe cyano, d'un groupe alkyle en $C_1$ à $C_{10}$, d'un groupe halogénoalcoxyle en $C_1$ à $C_4$, d'un groupe halogénoalkyle en $C_1$ à $C_{10}$ et d'un groupe aryle en $C_6$ à $C_{20}$,

Q est sélectionné dans le groupe constitué d'une liaison unique, de -O-, de $-CR_{18}R_{19}-$, de -C(=O)-, de -C(C=O)O-, de C(=O)NH-, de -S-, de $-SO_2-$, d'un groupe phényle et d'une combinaison de ceux-ci, $R_{18}$ et $R_{19}$ étant chacun sélectionnés dans le groupe constitué d'un atome d'hydrogène, d'un groupe alkyle en $C_1$ à $C_{10}$ et d'un groupe fluoroalkyle en $C_1$ à $C_{10}$.

**2.** Résine de polyamide-imide selon la revendication 1, dans laquelle le groupe organique divalent de la formule chimique 5 est sélectionné parmi les composés des formules chimiques 5a à 5d suivantes,

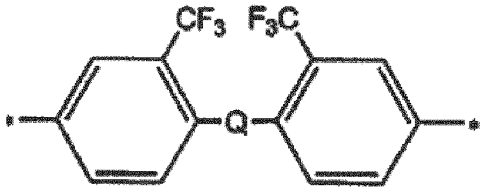

(5a)

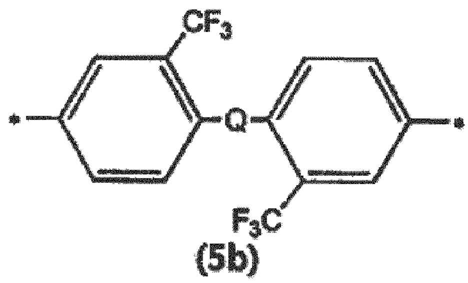

(5b)

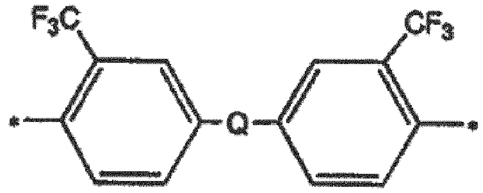

(5c)

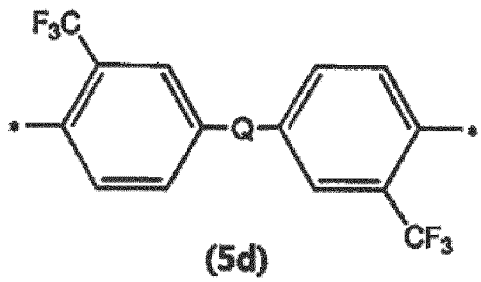

(5d)

**3.** Résine de polyamide-imide selon la revendication 1, dans laquelle le groupe organique tétravalent de la formule chimique 3 est sélectionné parmi les composés de la formule chimique 3f suivante.

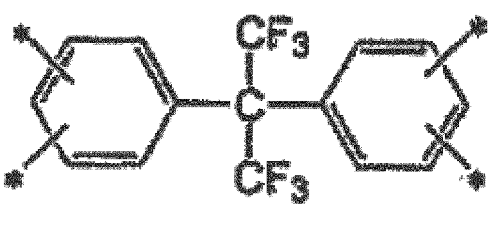

(3f)

4. Résine de polyamide-imide selon la revendication 1, dans laquelle les structures répétitives des formules chimiques 1a et 1b et la structure répétitive de la formule chimique 1c sont contenues à un rapport molaire de 1 : 5 à 1 : 2.

5. Résine de polyamide-imide selon la revendication 1, dans laquelle la structure répétitive des formules chimiques 1a, la structure répétitive de la formule chimique 1b et la structure répétitive de la formule chimique 1c sont polymérisées sous la forme d'un copolymère aléatoire.

6. Résine de polyamide-imide selon la revendication 1, dans laquelle la structure répétitive des formules chimiques 1a à 1c contient des structures répétitives représentées par les formules chimiques 1a-1 à 1c-1 suivantes.

[Formule chimique 1a-1]

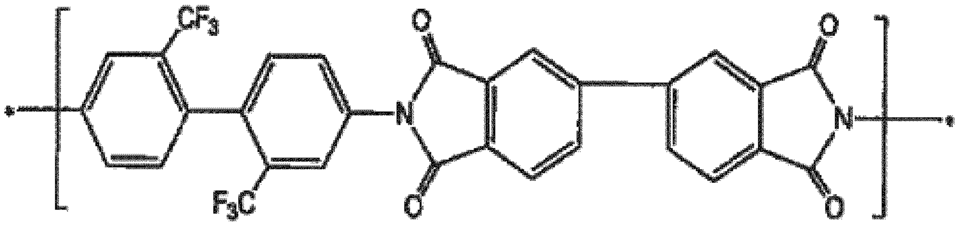

[Formule chimique 1b-1]

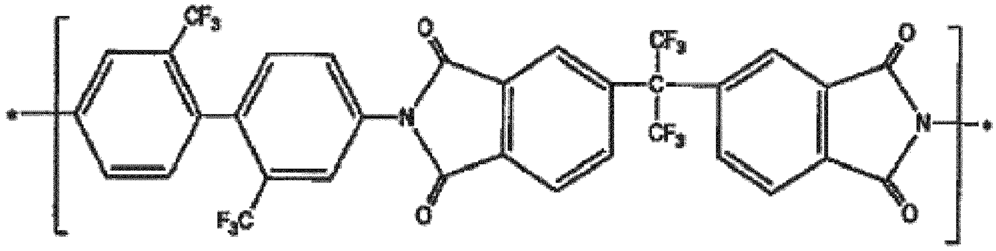

[Formule chimique 1c-1]

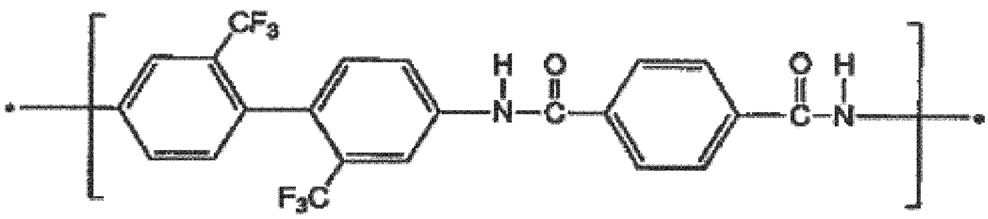

7. Procédé de fabrication du polyamide-imide comprenant les étapes consistant à :

mélanger une solution de diamine contenant le structure de la formule chimique 5 suivante :

faire réagir du dianhydride tétracarboxylique contenant des groupes organiques tétravalents de la formule chimique 2 suivante et de la formule chimique 3 suivante et le composé de la formule chimique 4 suivante avec la solution de diamine pour préparer un précurseur de polyamide-imide ; et
imidiser le précurseur de polyamide-imide,
dans lequel la quantité du dianhydride tétracarboxylique de la formule chimique 3 est de 5 % en moles à 15 % en moles par rapport à la quantité totale du dianhydride tétracarboxylique contenant les structures de la formule chimique

2 et de la formule chimique 3 :

[Formule chimique 2]

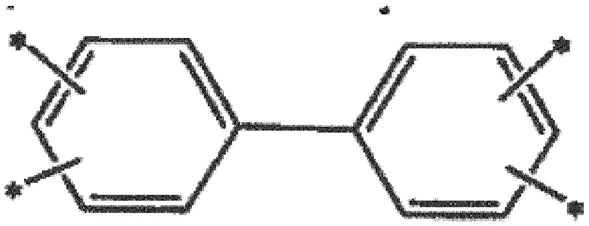

[Formule chimique 3]

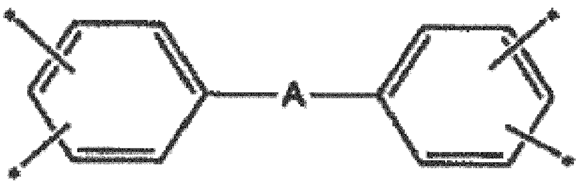

dans lesquelles formules,

A représente $-CR_{15}R_{16}-$, où $R_{18}$ et $R_{19}$ peuvent être chacun indépendamment sélectionnés dans un groupe fluoroalkyle en $C_1$ à $C_{10}$,

[Formule chimique 4]

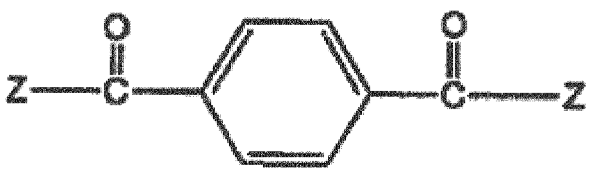

dans laquelle formule,
Z représente indépendamment un groupe sélectionné dans un groupe hydroxyle (-OH), un groupe halogénure sélectionné parmi -Cl, - Br, -F et -I et un groupe alkoxyle (-OR) en $C_1$ à $C_5$,

[Formule chimique 5]

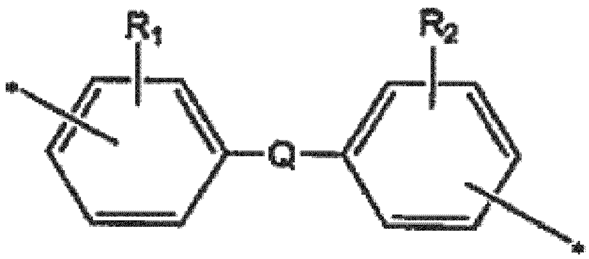

dans laquelle formule,
$R_1$ et $R_2$ représentent chacun indépendamment un substituant sélectionné parmi un atome d'halogène choisi dans le groupe constitué de -F, -Cl, -Br et de -I, un groupe hydroxyle (-OH), un groupe thiol (-SH), un groupe nitro ($-NO_2$), un groupe cyano, un groupe alkyle en $C_1$ à $C_{10}$, un groupe halogénoalcoxy en $C_1$ à $C_4$, un groupe halogénoalkyle en $C_1$ à $C_{10}$ et un groupe aryle en $C_6$ à $C_{20}$,
Q est sélectionné dans le groupe constitué d'une liaison unique, de -O-, de $-CR_{18}R_{19}-$, de -C(=O), de -C(=O)O-, de -C(=O)NH-, de -S-, de $-SO_2-$, d'un groupe phénylène et d'une combinaison de ceux-ci, où $R_{18}$ et $R_{19}$ sont chacun indépendamment sélectionnés dans le groupe constitué d'un atome d'hydrogène, d'un groupe alkyle

en $C_1$ à $C_{10}$ et d'un groupe fluoroalkyle en $C_1$ à $C_{10}$.

**8.** Procédé de fabrication du polyamide-imide selon la revendication 7, dans lequel les composés de la formule chimique 2, de la formule chimique 3 et de la formule chimique 4 et la diamine de la formule chimique 5 sont mis à réagir à un rapport molaire de 1 : 1,1 à 1,1 : 1.

**9.** Procédé de fabrication du polyamide-imide selon la revendication 7, dans lequel le composé de la formule chimique 5 est le composé de la formule chimique 5a ou de la formule chimique 5b suivantes :

[Formule chimique 5a]

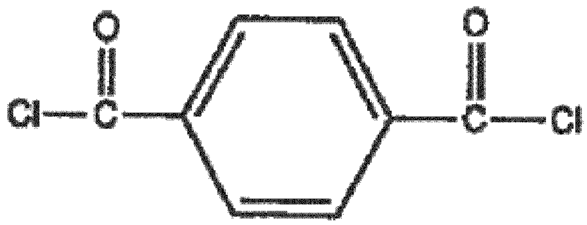

[Formule chimique 5b]

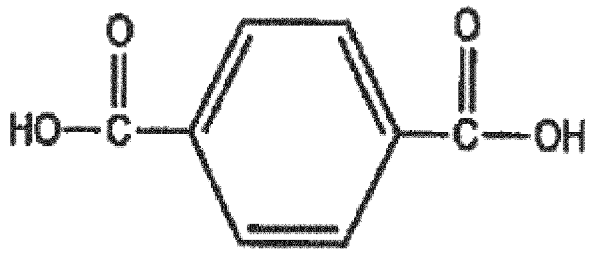

**10.** Film de polyamide-imide comprenant le polyamide-imide selon l'une quelconque de la revendication 1 à la revendication 6.

**11.** Film de polyamide-imide selon la revendication 10, qui a un indice de turbidité de 2 ou inférieur.

**12.** Film de polyamide-imide selon la revendication 10, qui a un indice de jaune (YI) de 10 ou inférieur.

**13.** Film de polyamide-imide selon la revendication 10, qui a un coefficient d'expansion thermique (CTE) de 15 ppm/°C ou inférieur à une température comprise entre 50 °C et 300 °C et un indice de résistance aux solvants défini sous la formule 1 suivante de 2 % ou inférieur.
[Formule 1]
Indice de résistance aux solvants (%) = $(T_0-T_{10})/T_0 \times 100$
où $T_{10}$ représente une épaisseur de film après l'immersion du film dans un solvant polaire pendant 10 minutes, et $T_0$ représente une épaisseur de film après l'immersion du film dans un solvant polaire.